# EUROPEAN PATENT SPECIFICATION

(11) **EP 2 848 639 B1**
(45) Date of publication and mention of the grant of the patent: **02.03.2022**
(21) Application number: 13788337.7
(22) Date of filing: 10.05.2013
(51) Int. Cl.: C08G 63/83, C08G 63/672

(54) **METHOD FOR PRODUCING POLYESTER RESIN HAVING CYCLIC ACETAL SKELETON**
VERFAHREN ZUR HERSTELLUNG EINES POLYESTERHARZES MIT EINEM CYCLISCHEN ACETALGERÜST
PROCÉDÉ DE PRÉPARATION D'UNE RÉSINE DE POLYESTER PRÉSENTANT UN SQUELETTE D'ACÉTAL CYCLIQUE

(30) Priority: 11.05.2012 JP 2012109677
(43) Date of publication of application: 18.03.2015
(73) Proprietor: Mitsubishi Gas Chemical Company, Inc., Tokyo 100-8324 (JP)
(72) Inventor: MINEZAKI, Takuya, Hiratsuka-shi Kanagawa 254-0016 (JP); HIROKANE, Takeshi, Hiratsuka-shi Kanagawa 254-0016 (JP); YOSHIMURA, Yasuaki, Hiratsuka-shi Kanagawa 254-0016 (JP)
(74) Representative: Vossius & Partner Patentanwälte Rechtsanwälte mbB
(86) International application number: PCT/JP2013/063195
(87) International publication number: WO 2013/168804

(56) References cited:
- EP-A1- 1 535 945
- WO-A1-2008/029842
- JP-A- S5 164 100
- JP-A- 2002 128 881
- JP-A- 2009 179 659
- JP-A- 2009 179 659
- JP-A- 2010 121 080
- JP-A- 2011 052 190
- US-A- 4 004 878

## Description

### Technical Field

The present invention relates to a method of producing a polyester resin having a cyclic acetal skeleton.

### Background Art

Polyethylene terephthalate (hereinafter abbreviated to "PET" in some cases) has high transparency, melt stability, solvent resistance, aroma retaining properties, and recycling properties, for example. For these characteristics, PET is widely used as a material for films, sheets, and hollow containers. Unfortunately, PET also has insufficient physical properties such as heat resistance, leading to attempts to reform PET by copolymerization.

Examples of the reforming by copolymerization include reforming of a polyester resin with a compound having a cyclic acetal skeleton. Specific examples thereof include PET modified with 3,9-bis(1,1-dimethyl-2-hydroxymethyl)-2,4,8,10-tetraoxaspiro[5.5]undecane. Examples thereof also include copolymerization polyesters comprising terephthalic acid, 1,4-butanediol, and a glycol having a cyclic acetal skeleton. Examples thereof further include polyester resins comprising a diol having a cyclic acetal skeleton as a monomer.

A typical method of producing a polyester resin is a method of reacting a dicarboxylic acid or a bisalkyl ester of a dicarboxylic acid with an excessive amount of a diol to form a bishydroxyalkyl ester of the dicarboxylic acid, and polycondensing the bishydroxyalkyl ester under reduced pressure to prepare a polymer. The method of preparing a bishydroxyalkyl ester from a dicarboxylic acid and a diol is called "direct esterification" while the method of preparing a bishydroxyalkyl ester from a bisalkyl ester of a dicarboxylic acid and diol is called "transesterification."

It is considered that direct esterification is more advantageous than transesterification in production of PET for the following reasons. Namely, (i) dicarboxylic acid (such as terephthalic acid) is cheaper than bisalkyl dicarboxylate esters (such as dimethyl terephthalate), (ii) the by-product generated during preparation of the bishydroxyalkyl dicarboxylate ester is alcohol in the transesterification while the by-product is water, which has small environmental load, in the direct esterification, and (iii) the transesterification requires a catalyst in the reaction to prepare a bishydroxyalkyl dicarboxylate ester while the direct esterification requires no catalyst and barely generates catalyst residues.

Unfortunately, when a polyester resin having a cyclic acetal skeleton is produced by typical direct esterification, the cyclic acetal skeleton undesirably decomposes due to an acid derived from the carboxyl group present in the system or water to be generated. The decomposition undesirably generates trifunctional monomers or tetrafunctional monomers to produce a gellated resin or provide a resin having remarkably wide molecular weight distribution. Such a resin having wide molecular weight distribution and gellated resin also have significantly low molding properties and mechanical properties.

Then, in the production of the polyester resin having a cyclic acetal skeleton, a method is attempted to react a bishydroxyalkyl dicarboxylate ester having a small acid value with a diol having a cyclic acetal skeleton to suppress decomposition of the diol having a cyclic acetal skeleton. For example, Patent Document 1 discloses a method of transesterifying an ester containing a limited amount of free carboxyl in the ester and a diol having a cyclic acetal skeleton. Patent Document 2 discloses a method of transesterifying a bishydroxyalkyl dicarboxylate ester having a limited acid value and a diol having a cyclic acetal skeleton in the presence of a basic compound. Patent Document 3 discloses a method of transesterifying a bishydroxyalkyl dicarboxylate ester having a limited acid value and a diol having a cyclic acetal skeleton in the presence of a titanium compound. Patent Document 4 discloses a method for producing a polyester resin comprising reacting dimethyl 1,4-cyclohexanedicarboxylate, dimethyl terephthalate, ethylene glycol and spiroglycol.

### Citation List

### Patent Document

Patent Document 1: Japanese Patent No. 4328948
Patent Document 2: Japanese Patent No. 4848631
Patent Document 3: Japanese Patent No. 4720229
Patent Document 4: JP2009179659

### Summary of Invention

### Technical Problem

These production methods above are useful as a method of producing a polyester resin having a cyclic acetal skeleton. However, these methods are limited in terms of the substance to be reacted with the diol having a cyclic acetal skeleton, which should be a bishydroxyalkyl dicarboxylate ester or an ester having a specific acid value. These methods are further limited because an additional step of producing these esters is needed if these specific esters are not available. Accordingly, a production method is desirably developed in which such limitation is relaxed to provide high flexibility in the production processes.

The present invention has been made in consideration of such circumstances, and an object of the present invention is to provide a method of producing a polyester resin comprising a dicarboxylic acid structural unit and a diol constitutional unit, the diol constitutional unit comprising a constitutional unit having a cyclic acetal skeleton, wherein the production processes have high flexibility and a polyester resin to be prepared has high physical properties.

### Solution to Problem

The present inventors, who have conducted extensive research to solve these problems, unexpectedly found that a diol (A) having a cyclic acetal skeleton, a bisalkyl dicarboxylate ester (B), and a diol (C) having no cyclic acetal skeleton are subjected to transesterification reaction in the presence of a basic compound (D), wherein the component (B) is one or more selected from the group consisting of dimethyl terephthalate and dimethyl 2,6-naphthalenedicarboxylate, the component (D) is potassium acetate and a ratio of component (D) to the component (B) is 0.5 mol.% or less, to efficiently produce a polyester resin comprising a dicarboxylate constitutional unit and a diol constitutional unit, the diol constitutional unit comprising a constitutional unit having a cyclic acetal skeleton. According to this knowledge, the present inventors conducted further research to find that a polyester resin having good physical properties can be prepared without limiting the substance to be reacted with the diol having a cyclic acetal skeleton to the bishydroxyalkyl dicarboxylate ester. Thus, the present invention has been made.

### Advantageous Effects of Invention

The present invention can provide a method of producing a polyester resin comprising a dicarboxylate constitutional unit and a diol constitutional unit, the diol constitutional unit comprising a constitutional unit having a cyclic acetal skeleton, wherein the production processes have high flexibility and a polyester resin to be prepared has high physical properties.

### Description of Embodiments

Hereinafter, the present embodiment (hereinafter, simply referred to as "Embodiment") will be described in detail. Embodiment below is only exemplified for describing the present invention, and will not limit the present invention to the following contents. The present invention can be properly modified within the scope of the claims and implemented.

The production method according to the embodiment is a method of producing a polyester resin comprising a dicarboxylate constitutional unit and a diol constitutional unit, the diol constitutional unit comprising a constitutional unit having a cyclic acetal skeleton, the method comprising reacting diol (A) having a cyclic acetal skeleton, bisalkyl dicarboxylate ester (B), and diol (C) having no cyclic acetal skeleton in the presence of basic compound (D), wherein the component (B) is one or more selected from the group consisting of dimethyl terephthalate and dimethyl 2,6-naphthalenedicarboxylate, the component (D) is potassium acetate, and a ratio of the component (D) to the component (B) is 0.5 mol.% or less.

The production method according to the embodiment can also use a known production apparatus used in production of polyester resins in the related art.

The diol (A) having a cyclic acetal skeleton is preferably a compound represented by Formula (i), a compound represented by Formula (ii), or both of them: 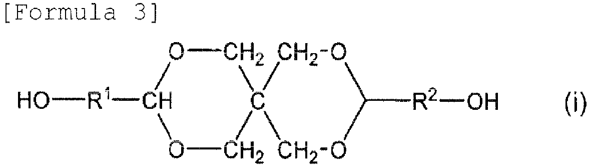 wherein R¹ and R² each independently are a divalent substituent, and represent one selected from the group consisting of aliphatic hydrocarbon groups having 1 to 10 carbon atoms, alicyclic hydrocarbon groups having 3 to 10 carbon atoms, and aromatic hydrocarbon groups having 6 to 10 carbon atoms; 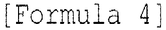 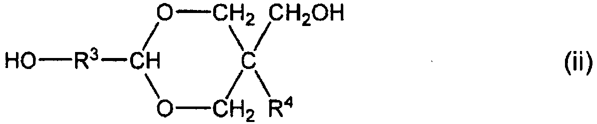 wherein R³ is a divalent substituent, and represents one selected from the group consisting of aliphatic hydrocarbon groups having 1 to 10 carbon atoms, alicyclic hydrocarbon groups having 3 to 10 carbon atoms, and aromatic hydrocarbon groups having 6 to 10 carbon atoms; R⁴ is a hydrogen atom or a monovalent substituent, and the monovalent substituent represents one selected from the group consisting of aliphatic hydrocarbon groups having 1 to 10 carbon atoms, alicyclic hydrocarbon groups having 3 to 10 carbon atoms, and aromatic hydrocarbon groups having 6 to 10 carbon atoms.

Any component (A) can be used without particular limitation. The component (A) is more preferably 3,9-bis(1,1-dimethyl-2-hydroxyethyl)-2,4,8,10-tetraoxaspiro[5.5]undecane, 5-methylol-5-ethyl-2-(1,1-dimethyl-2-hydroxyethyl)-1,3-dioxane or both of them.

These diols (A) having a cyclic acetal skeleton may be used alone or in combination.

Disclosed examples of the bisalkyl dicarboxylate ester (B) include bisalkyl esters of aliphatic dicarboxylic acids such as succinic acid, glutaric acid, adipic acid, pimelic acid, suberic acid, azelaic acid, sebacic acid, dodecanedicarboxylic acid, cyclohexanedicarboxylic acid, cyclodecanedicarboxylic acid, decalincarboxylic acid, norbornanedicarboxylic acid, tricyclodecanedicarboxylic acid, and pentacyclopentadecanedicarboxylic acid; and bisalkyl esters of aromatic dicarboxylic acids such as terephthalic acid, isophthalic acid, phthalic acid, 2-methylterephthalic acid, 1,4-naphthalenedicarboxylic acid, 1,5-naphthalenedicarboxylic acid, 2,6-naphthalenedicarboxylic acid, 2,7-naphthalenedicarboxylic acid, biphenylcarboxylic acid, and tetralindicarboxylic acid. In the present invention, however, the bisalkyl dicarboxylate ester (B) is one or more selected from the group consisting of dimethyl terephthalate and dimethyl 2,6-naphthalene dicarboxylate.

Disclosed examples of the bisalkyl ester include, but should not be particularly limited to, methyl ester, ethyl ester, propyl ester, isopropyl ester, butyl ester, isobutyl ester, and cyclohexyl ester.

Dimethyl terephthalate and/or dimethyl 2,6-naphthalenedicarboxylate are used in the present invention in view of the mechanical properties of the polyester resin to be prepared, the heat resistance thereof, and cost of raw materials.

Thesetwo bisalkyl dicarboxylate esters (B) may be used alone or in combination. Disclosed herein are also monoalkyl or polyalkyl esters of monocarboxylic acids such as acetic acid, propionic acid, and butyric acid; and carboxylic acids having a valence of 3 or more such as trimellitic acid and pyromellitic acid.

For production reasons, typically, the bisalkyl dicarboxylate ester contains a slight amount of an acid mixed during the production step. The acid value is used as the index for the content of the acid. Dimethyl terephthalate, one of the bisalkyl dicarboxylate esters, typically has an acid value of approximately 0.030 KOHmg/g, and dimethyl 2,6-naphthalenedicarboxylate typically has an acid value of approximately 0.010 KOHmg/g. The production method according to the embodiment, however, is not limited by the acid value of the bisalkyl dicarboxylate ester, and does not need to use the bisalkyl dicarboxylate esters having a specific acid value as described above. From such a viewpoint, it can be said that the production method according to the embodiment has wide selection of the raw materials and high flexibility.

Examples of the diol (C) having no cyclic acetal skeleton include, but should not be particularly limited to, aliphatic diols such as ethylene glycol, trimethylene glycol, 1,4-butanediol, 1,5-pentanediol, 1,6-hexanediol, diethylene glycol, propylene glycol, and neopentyl glycol; polyether diols such as polyethylene glycol, polypropylene glycol, and polybutylene glycol; alicyclic diols such as 1,3-cyclohexanedimethanol, 1,4-cyclohexanedimethanol, 1,2-decahydronaphthalenedimethanol, 1,3-decahydronaphthalenedimethanol, 1,4-decahydronaphthalenedimethanol, 1,5-decahydronaphthalenedimethanol, 1,6-decahydronaphthalenedimethanol, 2,7-decahydronaphthalenedimethanol, tetralindimethanol, norbornanedimethanol, tricyclodecanedimethanol, and pentacyclododecanedimethanol; bisphenols such as 4,4'-(1-methylethylidene)bisphenol, methylenebisphenol (bisphenol F), 4,4'-cyclohexylidenebisphenol (bisphenol Z), and 4,4'-sulfonylbisphenol (bisphenol S); alkylene oxide adducts of the bisphenols; aromatic dihydroxy compounds such as hydroquinone, resorcin, 4,4'-dihydroxybiphenyl, 4,4'-dihydroxydiphenyl ether, and 4,4'-dihydroxydiphenylbenzophenone; and alkylene oxide adducts of the aromatic dihydroxy compounds.

Among these, ethylene glycol is preferable from the viewpoint of the mechanical properties of the polyester resin to be prepared and cost of raw materials.

These diols (C) having no cyclic acetal skeleton may be used alone or in combination. Moreover, monoalcohols such as butyl alcohol, hexyl alcohol, and octyl alcohol and polyhydric alcohols having a valence of 3 or more such as trimethylolpropane, glycerol, and pentaerythritol can also be used in combination within the range not to impair the purpose of the embodiment.

The diol (A) having a cyclic acetal skeleton, the bisalkyl dicarboxylate ester (B), and the diol (C) having no cyclic acetal skeleton may be the so-call monomers or oligomers, respectively.

The production method according to the embodiment uses the basic compound (D). Use of the basic compound (D) allows the preparation of a polyester resin having good physical properties efficiently. The reason, although not clear, is presumed as follows. First, it seems that use of the component (D) can suppress decomposition of the cyclic acetal skeleton by an acid. If the reaction is made in the absence of the component (D), the cyclic acetal skeleton decomposes to generate polyfunctional monomers having functionalities of 3 or more. As a result, the polyester resin to be prepared has undesirably wide molecular weight distribution (Mw/Mn). Unfortunately, such wide molecular weight distribution of the polyester resin results in inferior mechanical properties. In the production method according to the embodiment, however, the decomposition of the cyclic acetal skeleton can be suppressed by use of the component (D), efficiently promoting the reaction to attain good mechanical properties of the polyester resin to be prepared (however, the action of Embodiment is not limited to this).

The ratio ((D)/(B)) of the component (D) to the component (B) is preferably 0.001 to 0.5 mol%, and more preferably 0.01 to 0.1 mol%. At a ratio of the component (D) to the component (B) of the upper limit value or less, hydrolysis of the ester bond by a base present in the polyester resin to be prepared can be effectively suppressed. For this reason, the polyester resin to be prepared has better physical properties. At a ratio of the component (D) to the component (B) of the lower limit value or more, an effect of adding the component (D) is sufficiently attained.

From the same viewpoint, the upper limit of the ratio of the component (D) to the component (B) is 0.5 mol% or less, further still more preferably 0.1 mol% or less, most preferably 0.05 mol% or less. The lower limit of the ratio of the component (D) to the component (B) is preferably 0.001 mol% or more, more preferably 0.002 mol% or more, still more preferably 0.005 mol% or more, further still more preferably 0.01 mol% or more.

In particular, if the basic compound (D) is used in a content within the above numeric value range, the polyester resin to be prepared can have a better appearance. The polyester resin can satisfy good mechanical properties and a good appearance at the same time. The appearance of the resin includes improved transparency of the polyester resin and prevention of cloudiness when the resin is molded into a molded body.

According to the present application, the basic compound (D) is potassium acetate. Other examples of basic compounds include, but should not be particularly limited to, carbonates, hydroxides, carboxylates, oxides, chlorides, and alkoxides of alkali metals such as lithium, sodium, and potassium; carbonates, hydroxides, carboxylates, oxides, chlorides, and alkoxides of alkaline earth metals such as beryllium, magnesium, and calcium; and amine compounds such as trimethylamine and triethylamine. Among these, carbonates, hydroxides, and carboxylates of alkali metals and carbonates, hydroxides, and carboxylates of alkaline earth metals are preferable, and carboxylates of alkali metals are more preferable. Use of carboxylates of alkali metals can improve the heat resistance of the polyester resin to be prepared in particular, but also can attain a particularly good appearance. The reasons, although not clear, are presumed as follows, for example. (i) The basicity of alkali metal carboxylate is a proper basicity for the promotion of the reaction in Embodiment. (ii) A carboxylate group and the ester bond in the polymer have high affinity, which can suppress the aggregation of the basic compound during or after the reaction, and keep a suitable morphology for the polyester resin. As a result, an increase in the molecular weight of the polyester resin and the control of the molecular weight distribution, which cannot be attained in the related art, can be suppressed while a bad appearance due to the aggregation of the basic compound component can be suppressed (however, the effect of Embodiment is not limited to these).

Examples of alkali metal carboxylates include formates, acetates, propionates, butyrates, isobutyrates, valerates, caproates, caprylates, caprates, laurates, myristates, palmitates, stearates, and benzoates of alkali metals. Among these, acetates, of alkali metals are preferable, and potassium acetate is used as basic compound (D).

The production method according to the embodiment may comprise reacting at least the diol (A) having a cyclic acetal skeleton, the bisalkyl dicarboxylate ester (B), and the diol (C) having no cyclic acetal skeleton in the presence of the basic compound (D), and has high flexibility. If the production method according to the embodiment, the component (D) in particular can be effectively used, for example, the polyester resins requiring many steps for their production in the related art can be efficiently produced by one step or the steps less than those in the related art. In addition, in Embodiment, it is unexpected that if the ratio of the component (D) to the component (B) is controlled to be relatively low, even the polyester resins having a structure that cannot be readily produced in the related art can be produced more readily and efficiently.

The production method according to the embodiment is a simple method of reacting the component (A), the component (B), and the component (C) as the monomers in the presence of the basic compound (D), and has high flexibility because the method is readily combined with other steps. Accordingly, the production method according to the embodiment can be optionally combined with a plurality of steps in consideration of the physical properties to be desired for the target polyester resin.

One of the raw materials used in the production method in the related art, i.e., bishydroxyalkyl dicarboxylate ester is not readily available. In contrast, the production method according to the embodiment is advantageous in that the production method does not need to use such a raw material not readily available. Namely, the production method is also advantageous in relaxation of the limitation of the raw material to be used and a reduction in cost.

The production method according to the embodiment may comprise reacting the component (A), the component (B), and the component (C) in the presence of the component (D) to form an oligomer (oligomerizing step), and further adding a predetermined monomer to the reaction mixture prepared in the oligomerizing step to form a polymer (polymerizing step), for example. In this case, examples of the predetermined monomer added in the polymerizing step include one or more selected from the group consisting of the component (A), the component (B), and the component (C). Alternatively, the predetermined monomer may be a monomer other than the components (A) to (C). Hereinafter, as one example, the case where the oligomerizing step and the polymerizing step are performed will be described.

The oligomerizing step may be performed in the absence of a catalyst or in the presence of a catalyst for oligomerizing. When the catalyst is used, the amount thereof to be added is preferably 0.0001 to 5 mol% based on the component (B).

Any known catalyst in the related art can also be used in the oligomerizing step without particular limitation. Specific examples of the catalyst include compounds (such as fatty acid salts, carbonates, phosphates, hydroxides, chlorides, oxides, and alkoxides) of metals such as zinc, lead, cerium, cadmium, manganese, cobalt, lithium, sodium, potassium, calcium, nickel, magnesium, vanadium, aluminum, titanium, germanium, antimony, and tin; and metal magnesium. Among these, at least compounds of manganese, aluminum, titanium, germanium, antimony, and tin are preferable, and manganese compounds are more preferable. Any known manganese compound in the related art can also be used without particular limitation, and manganese acetate is preferable, for example. The catalyst for the oligomerizing step may also be those that can be used as the component (D) above. Namely, if one of the exemplified components (D) serving as the catalyst for the oligomerizing step is selected, the selected component (D) can be used both as the component (D) and as the catalyst for the oligomerizing step. These catalysts for the oligomerizing step may be used alone or in combination.

A known etherification inhibitor or a heat stabilizer in the related art may be used in combination. Examples of the etherification inhibitor include amine compounds. Examples of the heat stabilizer include phosphoric acid, phosphorous acid, phenylphosphonic acid, phosphoric acid esters, and phosphorous acid esters.

The oligomerizing step can be performed at any reaction temperature, preferably 80 to 240°C, more preferably 100 to 235°C, still more preferably 150 to 230°C. If the oligomerizing step is performed under the above conditions, the decomposition of the diol (A) having a cyclic acetal skeleton and the side reaction such as by-production of trifunctional monomers and tetrafunctional monomers can be effectively suppressed. Furthermore, the side reaction such as dehydration etherification of the diol (C) having no cyclic acetal skeleton can also be suppressed.

In the oligomerizing step, the diol (A) having a cyclic acetal skeleton, the bisalkyl dicarboxylate ester (B), and the diol (C) having no cyclic acetal skeleton can be used in any ratio. The ratio (((A) + (C))/(B)) of the total of the diol (A) having a cyclic acetal skeleton and the diol (C) having no cyclic acetal skeleton to the bisalkyl dicarboxylate ester (B) is preferably 1.2 to 2.0 times mol, more preferably 1.5 to 1.9 times mol, still more preferably 1.6 to 1.8 times mol.

The oligomerizing step is performed until the reaction rate of the transesterification reaction of the bisalkyl dicarboxylate ester (B) reaches preferably 50 mol% or more, more preferably 70 mol% or more, still more preferably 90 mol% or more. The reaction rate of the transesterification reaction can be calculated from the mass of the monoalcohol distilled off to the outside of the system. The reaction time for the oligomerizing step is preferably the time until the distillation of the monoalcohol is completed.

Examples of the polymerizing step include polycondensing the oligomer prepared in the oligomerizing step under reduced pressure to form a polymer. The polycondensation in the polymerizing step can be performed under any condition. For example, the same condition can be used as that in the polycondensation step of the method of producing a polyester resin in the related art.

The polycondensation step can be performed at any pressure. Preferably, the pressure is gradually reduced as the reaction progresses. The final pressure for the polycondensation reaction is preferably 0.1 to 300 Pa. A final pressure for the polycondensation reaction of 300 Pa or less can sufficiently increase the reaction rate of the polycondensation reaction.

The polycondensation step can be performed at any reaction temperature. Preferably, the temperature is gradually raised as the reaction progresses. The final reaction temperature for the polycondensation reaction is preferably 190 to 300°C. A final reaction temperature for the polycondensation reaction of 300°C or less can effectively suppress the side reaction such as pyrolysis of the reaction product. In addition, the temperature controlled to fall within the above range can effectively suppress yellowness (such as color changes to yellow) of the polyester resin to be prepared.

The polymerizing step can also be terminated in the same manner as in the standard method of producing a polyester resin. Examples thereof include termination of the reaction after the polyester resin reaches a desired degree of polymerization by measuring the melt viscosity. The melt viscosity can be determined by the degree of a load from a stirrer in terms of a torque or a load current value of a motor. Such a method is easy and preferable.

The polymerizing step can be performed for any reaction time, preferably for 6 hours or less, more preferably for 4 hours or less. The reaction time controlled to fall within the above range can efficiently suppress the side reactions such as the decomposition of the diol (A) having a cyclic acetal skeleton and by-production of trifunctional monomers and tetrafunctional monomers, and can attain a better color tone of the polyester resin.

The polymerizing step may be performed in the absence of a catalyst or in the presence of a catalyst for polymerizing. When the catalyst is used, the amount thereof to be added is preferably 0.0001 to 5 mol% based on the dicarboxylic acid constitutional unit of the oligomer.

Any known catalyst for the polymerizing step can be used without particular limitation. Preferable catalysts for the polymerizing step are metal compounds of aluminum, titanium, germanium, antimony, and tin. Among these, alkoxides, oxides, and carboxylates of titanium, alkoxides and oxides of germanium, and alkoxides and oxides of antimony are more preferable. The catalyst is still more preferably oxides of antimony from the viewpoint of the physical properties and the polymerization rate of the polyester resin to be prepared and cost of raw materials. These may be used alone or in combination.

The method of producing a polyester resin according to the embodiment can also use an etherification inhibitor, a variety of stabilizers such as a heat stabilizer, a polymerization adjuster, a light stabilizer, an antistatic agent, a lubricant, an antioxidant, and a mold release agent. These may also be those known in the related art.

Examples of the etherification inhibitor include amine compounds. Examples of the heat stabilizer include phosphoric acid, phosphorous acid, phenylphosphonic acid, phosphoric acid esters, and phosphorous acid esters. Examples of the polymerization adjuster include aliphatic monoalcohols such as decanol and hexadecanol; aromatic monoalcohols such as benzyl alcohol; aliphatic monocarboxylic acids such as caproic acid, lauric acid, and stearic acid; and aromatic monocarboxylic acids such as benzoic acid. Examples of the light stabilizer include hindered amine light stabilizers, benzotriazole UV absorbers, and triazine UV absorbers. Examples of the antistatic agent include glycerol fatty acid ester monoglyceride and sorbitan fatty acid esters. Examples of the lubricant include aliphatic carboxylic acid esters, glycerol fatty acid esters, sorbitan fatty acid esters, and pentaerythritol fatty acid esters. Examples of the antioxidant include phenol antioxidants and phosphorous acid ester antioxidants. Examples of the mold release agent include aliphatic carboxylic acid esters, glycerol fatty acid esters, sorbitan fatty acid esters, and pentaerythritol fatty acid esters.

The structure of the polyester resin to be prepared by the production method according to the embodiment will be described. The content of the diol constitutional unit having a cyclic acetal skeleton in the total diol constitutional units that form the polyester resin is preferably 5 to 60 mol%, more preferably 1C to 60 mol%, still more preferably 15 to 55 mol%, further still more preferably 20 to 50 mol%.

In the production method in the related art, a polyester resin comprising 5 mol% or more diol constitutional unit having a cyclic acetal skeleton is difficult to produce. The production method according to the embodiment can efficiently produce such a polyester resin comprising 5 mol% or more diol constitutional unit having a cyclic acetal skeleton. The polyester resin comprising 5 mol% or more diol constitutional unit having a cyclic acetal skeleton has high physical properties, and is useful. From these viewpoints, the content of the diol constitutional unit having a cyclic acetal skeleton is preferably 5 mol% or more, more preferably 10 mol% or more, still more preferably 15 mol% or more, further still more preferably 20 mol% or more.

The polyester resin comprising 60 mol% or less diol constitutional unit having a cyclic acetal skeleton can be efficiently produced without limitation to production in the production method according to the embodiment. The polyester resin comprising 60 mol% or less diol constitutional unit having a cyclic acetal skeleton also has high physical properties, and is useful. From these viewpoints, the content of the diol constitutional unit having a cyclic acetal skeleton is preferably 60 mol% or less, more preferably 55 mol% or less, still more preferably 50 mol% or less.

If dimethyl 2,6-naphthalenedicarboxylate is introduced as the dicarboxylic acid constitutional unit that forms the polyester resin to be prepared by the production method according to the embodiment, the polyester resin can have further improved physical properties. In particular, a polyester resin having high heat resistance can be attained. Namely, suitable examples of the polyester resin to be prepared by the production method according to the embodiment include polyester resins having a constitutional unit derived from dimethyl 2,6-naphthalenedicarboxylate as the dicarboxylic acid constitutional unit. The content of the constitutional unit derived from dimethyl 2,6-naphthalenedicarboxylate in the dicarboxylic acid constitutional unit is preferably 5 to 100 mol%, more preferably 21 to 100 mol%, still more preferably 45 to 100 mol%.

The number average molecular weight (Mn) of the polyester resin to be prepared by the production method according to the embodiment is preferably 12,000 to 18,000, more preferably 13,000 to 17,000, still more preferably 14,000 to 16,000. At a number average molecular weight within the lower limit value or more, the polyester resin can have further improved mechanical properties, particularly a higher tensile elongation rate. At a number average molecular weight within the upper limit value or less, an increase in the viscosity of the polyester resin can be suppressed to attain higher handling properties during manufacturing.

The molecular weight distribution (Mw/Mn) of the polyester resin to be prepared by the production method according to the embodiment is preferably 2.5 to 3.8. At a molecular weight distribution within the above range, the polyester resin has further improved physical properties, particularly further improved mechanical properties. The upper limit value of the molecular weight distribution is more preferably 3.5 or less, still more preferably 3.3 or less. At a molecular weight distribution within the upper limit value or less, the polyester resin has further improved mechanical properties, particularly a higher tensile elongation rate. As above, in Embodiment, the molecular weight distribution can be controlled to be a low value as above. The production method according to the embodiment is advantageous in that a molecular weight distribution of 3.0 or more can be sufficiently attained without strictly controlling the reaction condition.

The polyester resin to be prepared by the production method according to the embodiment can be molded by any molding method. A known molding method in the related art can also be used. Examples of the molding method include injection molding, extrusion molding, calender molding, extrusion foaming molding, extrusion blow molding, and injection blow molding.

### Examples

Hereinafter, the present invention will be described in more details using Examples, but the scope of the present invention will not be limited by these Examples.

### [Methods for evaluating polyester resin]

### (1) Number average molecular weight (Mn), weight average molecular weight (Mw), and molecular weight distribution (Mw/Mn)

A polyester resin (2 mg) was dissolved in chloroform (20 g), and was measured by a gel permeation chromatograph (GPC). The result was calibrated with standard polystyrene to determine Mn, Mw, and Mw/Mn. The following GPC, apparatus column, and measurement conditions were used.
GPC: made by Tosoh Corporation, "HLC-8320GPC"
apparatus column: TSKgel SuperMultiporeHZ-N, M&H
solvent used in the measurement: chloroform
flow rate: 0.6 mL/min

### (2) Component composition

The polyester resin was measured by ¹H-NMR, and the component composition of the polyester resin was determined from the ratio of peak areas derived from the respective constitutional units. A measurement apparatus "JNM-AL400" made by JEOL, Ltd. was used, and the measurement was performed at 400 MHz. The solvent used was deuterochloroform. When the solubility of the polymer was insufficient, a proper amount of heavy trifluoroacetic acid was added to sufficiently dissolve the polymer. For the constitutional units of the polyester resin shown in Table 2, Table 4, and Table 6 (see the item [mol%] in Tables), the numeric values of NDCM and DMT each represent the ratio thereof to the total carboxylic acid units, and the numeric values of EG, SPG, and DEG as by-products of the reaction each represent the ratio thereof to the total diol units.

### (3) Glass transition temperature (Tmg)

The glass transition temperature was measured according to JIS K7121. Specifically, the polyester resin was placed in an aluminum container not sealed, and the temperature was raised to 280°C under a nitrogen gas atmosphere, and was then quenched. The temperature of the polyester resin was raised again to obtain a temperature profile. From the profile, the glass transition temperature was determined. The following measurement apparatus and measurement conditions were used.
measurement apparatus: made by SHIMADZU Corporation, "DSC/TA-60WS"
sample: approximately 10 mg
flow rate of nitrogen: 50 mL/min
range for the measurement: 20 to 280°C
temperature raising rate: 20°C/min

### (4) Yellow chromaticity (YI)

A polyester pellet (5.8 g) was placed in a quartz cell having a diameter of 20 mm and a height of 10 mm to measure the yellow chromaticity according to JIS K7373. The following measurement apparatus and measurement conditions were used.
measurement apparatus: made by Nippon Denshoku Industries Co., Ltd., color meter "ZE-2000"
the number of the measurement: 3 times

### (5) Intrinsic viscosity (IV)

The polyester resin was dissolved in a mixed solvent of phenol/1,1,2,2-tetrachloroethane = 6/4 (weight ratio). While the temperature was kept at 25°C, the intrinsic viscosity was measured by an Ubbelohde viscometer.

### [Method of molding polyester resin molded body]

The polyester resin was injection molded with an injection molding machine (made by Sumitomo Heavy Industries, Ltd., injection molding machine "SE130DU") and a metal mold at a cylinder temperature of 240 to 280°C and a metal mold temperature of 40 to 60°C to produce a molded body. The molded body was used as a test piece to evaluate physical properties.

### [Method of evaluating molded body of polyester resin]

### (tensile strength, tensile modulus of elasticity, tensile elongation rate)

The tensile strength, the tensile modulus of elasticity, and the tensile elongation rate were calculated according to JIS K7161. The following measurement apparatus and measurement conditions were used.
measurement apparatus: made by Toyo Seiki Seisaku-sho, Ltd., "Strograph APIII"
test piece for the measurement: JIS No. 1 test piece
test rate: 5 mm/min

### (Example 1)

A polyester producing apparatus including a packed-tower rectification column, a partial condenser, a total condenser, a cold trap, a stirrer, a heating apparatus, and a nitrogen inlet tube was prepared. Diol (A) having a cyclic acetal skeleton (3,9-bis(1,1-dimethyl-2-hydroxyethyl)-2,4,8,10-tetraoxaspiro[5.5]undecane), bisalkyl dicarboxylate ester (B) (dimethyl 2,6-naphthalenedicarboxylate, dimethyl terephthalate) as the dicarboxylic acid component, diol (C) having no cyclic acetal skeleton (ethylene glycol), and basic compound (D) (potassium acetate) were placed in the apparatus in the ratio shown in Table 1. The temperature was raised to 215°C in the presence of 0.03 mol% manganese acetate tetrahydrate based on the dicarboxylic acid component under a nitrogen atmosphere to make transesterification reaction. The reaction rate of the dicarboxylic acid component in the transesterification reaction was measured over time. The reaction rate of the dicarboxylic acid component in the transesterification reaction was calculated from the mass of methanol distilled off to the outside of the system.

After the reaction rate of the dicarboxylic acid component reached 90% or more, antimony(III) oxide (0.02 mol% based on the dicarboxylic acid component) and triethyl phosphate (0.06 mol% based on the dicarboxylic acid component) were added, and the temperature was gradually raised and the pressure was gradually reduced. Finally, the reaction mixture was polycondensed at 250°C to 280°C and 0.1 kPa or less. The reaction was terminated when the reaction product reached a proper melt viscosity. A polyester resin was recovered. The results of evaluation of the polyester resin are shown in Table 2.

### (Examples 2 and 3)

Polyester resins were prepared in the same manner as in Example 1 except that the raw materials were used in the contents shown in Table 1. The results of evaluation of the respective polyester resins are shown in Table 2. The polyester resin prepared in Example 2 had an MI (melt index; 260°C, 2.16 kg) of 13 g/10 min, and the polyester resin prepared in Example 3 had an MI of 11 g/10 min.

### (Comparative Example 1)

A polyester resin was prepared in the same manner as in Example 1 except that the raw materials were used in the contents shown in Table 1, and potassium acetate was not used. The results of evaluation of the polyester resin are shown in Table 2.

**[Table 1]**

| | | Example 1 | Comparative Example 1 | Example 2 | Example 3 |
|---|---|---|---|---|---|
| (B)NDCM | [mol] | 0.776 | 0.863 | 0.388 | 0.388 |
| (B)DMT | [mol] | 0.776 | 0.863 | 1.164 | 1.164 |
| (A) SPG | [mol] | 0.466 | 0.518 | 0.233 | 0.310 |
| (C) EG | [mol] | 2.329 | 2.588 | 2.561 | 2.483 |
| Mn (AcO)₂ | [mmol] | 0.466 | 0.518 | 0.466 | 0.466 |
| (D) AcOK | [mmol] | 0.311 | - | 0.310 | 0.310 |
| (D) / (B) | [mol%] | 0.02 | | 0.02 | 0.02 |
| Sb₂O₃ | [mmol] | 0.078 | 0.086 | 0.078 | 0.078 |
| TEP | [mmol] | 0.776 | 0.863 | 0.776 | 0.776 |

### Abbreviations

- NDCM:: dimethyl 2,6-naphthalenedicarboxylate
- DMT:: dimethyl terephthalate
- SPG:: 3,9-bis(1,1-dimethyl-2-hydroxyethyl)-2,4,8,10-tetraoxaspiro[5.5]undecane
- EG:: ethylene glycol
- DEG:: diethylene glycol
- Mn(AcO)₂:: manganese acetate tetrahydrate
- AcOK:: potassium acetate
- Sb₂O₃:: antimony(III) oxide
- TEP:: triethyl phosphate

**[Table 2]**

| | | Example 1 | Comparative Example 1 | Example 2 | Example 3 |
|---|---|---|---|---|---|
| Pellet | | | | | |
| (B) NDCM | [mol%] | 49.1 | 52.6 | 24.6 | 25.4 |
| (B) DMT | [mol%] | 50.9 | 47.4 | 75.4 | 74.6 |
| (A) SPG | [mol%] | 29.3 | 30.1 | 15.1 | 20.1 |
| (C) EG | [mol%] | 68.8 | 68.3 | 84.1 | 79.1 |
| DEG | [mol%] | 1.9 | 1.6 | 0.8 | 0.8 |
| Mn | | 13700 | 11700 | 15300 | 16900 |
| Mw | | 44800 | 46500 | 55400 | 58200 |
| Mw/Mn | | 3.3 | 4.0 | 3.6 | 3.4 |
| Tmg | [°C] | 117.8 | 116.0 | 103.5 | 106.1 |
| YI | | 6.4 | 7.4 | 6.0 | 5.2 |
| IV | [dL/g] | 0.59 | 0.54 | 0.66 | 0.66 |
| Tensile strength | [MPa] | 61.9 | 51.3 | 57.1 | 56.4 |
| Tensile modulus of elasticity | [GPa] | 2.2 | 2.4 | 2.38 | 2.25 |
| Tensile elongation rate | [%] | 196.7 | 1.0 | 253 | 250 |

From comparison between Examples 1 to 3 and Comparative Example 1, it is at least found that the polyester resin in Comparative Example 1 has a large value in molecular weight distribution (Mw/Mn) and a low tensile elongation rate among mechanical properties. In these Examples, it is found at least that polyester resins having good physical properties are prepared by a simple production method having high flexibility.

### <Production conditions>

The production conditions for the polyester resin were varied and examined in more detail (Examples 4 to 7).

### (Examples 4 to 7)

Polyester resins were prepared in the same manner as in Example 1 except that the raw materials were used in the contents shown in Table 3. The results of evaluation of the polyester resins are shown in Table 4.

**[Table 3]**

| | | Example 4 | Example 5 | Example 6 | Example 7 |
|---|---|---|---|---|---|
| (B)NDCM | [mol] | 0.310 | 0.388 | 0.310 | 0.466 |
| (B)DMT | [mol] | 1.242 | 1.164 | 1.242 | 1.086 |
| (A) SPG | [mol] | 0.155 | 0.155 | 0.233 | 0.310 |
| (C) EG | [mol] | 2.638 | 2.638 | 2.561 | 2.483 |
| Mn(AcO)₂ | [mmol] | 0.466 | 0.466 | 0.466 | 0.466 |
| (D)AcOK | [mmol] | 0.310 | 0.310 | 0.310 | 0.310 |
| (D) / (B) | [mol%] | 0.02 | 0.02 | 0.02 | 0.02 |
| Sb₂O₃ | [mmol] | 0.078 | 0.078 | 0.078 | 0.078 |
| TEP | [mmol] | 0.776 | 0.776 | 0.776 | 0.776 |

**[Table 4]**

| | | Example 4 | Example 5 | Example 6 | Example 7 |
|---|---|---|---|---|---|
| Pellet | | | | | |
| (B)NDCM | [mol%] | 20.1 | 24.8 | 19.6 | 29.8 |
| (B) DMT | [mol%] | 79.9 | 75.2 | 80.4 | 70.2 |
| (A)SPG | [mol%] | 10.0 | 10.4 | 15.1 | 19.8 |
| (C) EG | [mol%] | 89.5 | 88.7 | 84.4 | 79.8 |
| DEG | [mol%] | 0.5 | C.8 | 0.5 | 0.4 |
| Mn | | 17400 | 15500 | 17900 | 16600 |
| Mw | | 55300 | 52500 | 56800 | 52100 |
| Mw/Mn | | 3.2 | 3.4 | 3.2 | 3.1 |
| Tmg | [°C] | 98.7 | 98.9 | 101.4 | 107.1 |
| YI | | 3.4 | 2.2 | 1.7 | -0.9 |
| IV | [dL/g] | 0.69 | 0.66 | 0.68 | 0.64 |
| MI | [g/10 min] | 15 | 14 | 16 | 15 |

### <Appearance of polyester resin>

The production conditions for the polyester resin were varied to examine the appearance of the polyester resin in more detail. The appearance was evaluated based on the following criteria.

### (Evaluation of appearance)

The prepared resin pellet was visually observed, and the pellet was determined as "good" if cloudiness or other transparency-inhibiting factors were not found within the resin. The pellet was determined as "cloudiness" if cloudiness was found.

### [Preparation of strand and evaluation of physical properties]

A strand was prepared from the resin pellet prepared as above to evaluate the mechanical properties.

A strand was prepared with a Capilograph made by Toyo Seiki Seisaku-sho, Ltd. by the following method. The resin pellet was placed in a cylinder (cylinder diameter: 10 mm, cylinder temperature: 240°C), and was stagnated for 6 minutes to be melted. The melted polyester resin was extruded from orifices (diameter of an orifice: 1 mm) with a piston at a piston rate of 30 mm/min. The extruded product was taken at a take up rate of 5 m/min to prepare a strand (diameter: 0.9 mm). The tensile strength, the tensile modulus of elasticity, and the tensile elongation rate of the strand were calculated according to JIS K7161. The following measurement apparatus and measurement conditions were used.
measurement apparatus: made by Toyo Seiki Seisaku-sho, Ltd., automatic tensile tester "Strograph APIII"
test piece for the measurement: strand having a diameter of 0.9 mm
test rate: 5 mm/min

### (Example 8) Reference example

A polyester resin was prepared in the same manner as in Example 1 except that the raw materials were used in the contents shown in Table 5. The physical properties and the appearance of the polyester resin were compared with those of Example 1. The results of evaluation are shown in Table 6.

**[Table 5]**

| | | Example 1 | Example 8 |
|---|---|---|---|
| (B) NDCM | [mol] | 0.776 | 0.776 |
| (B) DMT | [mol] | 0.776 | 0.776 |
| (A) SPG | [mol] | 0.466 | 0.466 |
| (C) EG | [mol] | 2.329 | 2.329 |
| Mn (AcO)₂ | [mmol] | 0.466 | 0.466 |
| (D)AcOK | [mmol] | 0.311 | 15.5 |
| (D) / (B) | [mol%] | 0.02 | 1 |
| Sb₂O₃ | [mmol] | 0.078 | 0.156 |
| TEP | [mmol] | 0.776 | 0.931 |

**[Table 6]**

| | Unit | Example 1 | Example 8 |
|---|---|---|---|
| (B)NDCM | [mol%] | 49.1 | 50.5 |
| (B)DMT | [mol%] | 50.9 | 49.5 |
| (A)SPG | [mol%] | 29.3 | 30.7 |
| (C)EG | [mol%] | 68.8 | 66.9 |
| DEG | [mol%] | 1.9 | 2.4 |
| Mn | [-] | 13700 | 11700 |
| Mw | [-] | 44800 | 43702 |
| Mw/Mn | [-] | 3.3 | 3.7 |
| Tmg | [°C] | 117.8 | 117.8 |
| IV | [dL/g] | 0.59 | 0.56 |
| Appearance of resin | | Good | Cloudiness |
| Tensile modulus of elasticity of strand | [GPa] | 0.92 | 1.41 |
| Tensile strength of strand | [MPa] | 58 | 86 |
| Tensile elongation rate of strand | [%] | 113 | 11 |

The methods in Examples 1 and 8 are production methods having high flexibility. In Example 1, it is found that the appearance of the polyester resin is good and further improved. In Example 1, it is also found that the tensile strength of the polyester resin is further improved among the mechanical properties of the polyester resin.

From this, it is found that the methods of producing a polyester resin according to Examples have high flexibility in design of the step of producing a polyester resin having a cyclic acetal skeleton without specifying the acid value of bisalkyl dicarboxylate ester as in the known production method. It is also found that the polyester resins prepared by the production methods according to Examples have physical properties equal to those of the resins prepared by the known production method.

This application is based on Japanese Patent Application No. 2012-109677, filed to the Japanese Patent Office on May 11, 2012.

## Claims

1. A method of producing a polyester resin comprising a dicarboxylate constitutional unit and a diol constitutional unit, the diol constitutional unit comprising a constitutional unit having a cyclic acetal skeleton, the method comprising:
reacting a diol (A) having a cyclic acetal skeleton, a bisalkyl dicarboxylate ester (B), and a diol (C) having no cyclic acetal skeleton in the presence of a basic compound (D), wherein the component (B) is one or more selected from the group consisting of dimethyl terephthalate and dimethyl 2,6-naphthalenedicarboxylate,
the component (D) is potassium acetate, and
a ratio of the component (D) to the component (B) is 0.5 mol% or less.

2. The method of producing a polyester resin according to claim 1, wherein a ratio of the component (D) to the component (B) is 0.001 to 0.5 mol%.

3. The method of producing a polyester resin according to claim 1 or 2, wherein the component (A) is a compound represented by Formula (i), a compound represented by Formula (ii), or both: 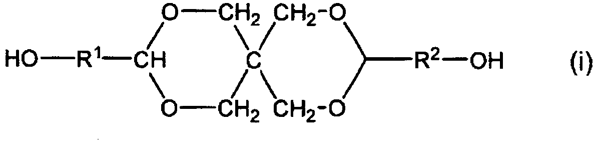 wherein R¹ and R² each independently are a divalent substituent selected from the group consisting of aliphatic hydrocarbon groups having 1 to 10 carbon atoms, alicyclic hydrocarbon groups having 3 to 10 carbon atoms, and aromatic hydrocarbon groups having 6 to 10 carbon atoms; 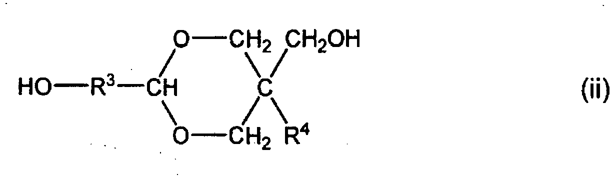 wherein R³ is a divalent substituent selected from the group consisting of aliphatic hydrocarbon groups having 1 to 10 carbon atoms, alicyclic hydrocarbon groups having 3 to 10 carbon atoms, and aromatic hydrocarbon groups having 6 to 10 carbon atoms; R⁴ is a hydrogen atom or a monovalent substituent, the monovalent substituent being selected from the group consisting of aliphatic hydrocarbon groups having 1 to 10 carbon atoms, alicyclic hydrocarbon groups having 3 to 10 carbon atoms, and aromatic hydrocarbon groups having 6 to 10 carbon atoms.

4. The method of producing a polyester resin according to any one of claims 1 to 3, wherein the component (A) is at least one of 3,9-bis(1,1-dimethyl-2-hydroxyethyl)-2,4,8,10-tetraoxaspiro[5.5]undecane and 5-methylol-5-ethyl-2-(1,1-dimethyl-2-hydroxyethyl)-1,3-dioxane.

## Patentansprüche

1. Ein Verfahren zur Herstellung eines Polyesterharzes, umfassend eine Dicarboxylat-Struktureinheit und eine Diol-Struktureinheit, wobei die Diol-Struktureinheit eine Struktureinheit mit einem cyclischen Acetal-Gerüst umfasst, wobei das Verfahren umfasst:
Umsetzen eines Diols (A) mit einem cyclischen Acetal-Gerüst, eines Bisalkyl-Dicarboxylat-Esters (B) und eines Diols (C) ohne ein cyclisches Acetal-Gerüst, in Gegenwart einer basischen Verbindung (D),
wobei die Komponente (B) eine oder mehrere ist, ausgewählt aus der Gruppe bestehend aus Dimethylterephthalat und Dimethyl-2,6-Naphthalindicarboxylat,
die Komponente (D) Kaliumacetat ist und
ein Verhältnis der Komponente (D) zur Komponente (B) 0,5 Mol-% oder weniger beträgt.

2. Das Verfahren zur Herstellung eines Polyesterharzes nach Anspruch 1, wobei ein Verhältnis der Komponente (D) zur Komponente (B) 0,001 bis 0,5 Mol-% beträgt.

3. Das Verfahren zur Herstellung eines Polyesterharzes nach Anspruch 1 oder 2, wobei es sich bei der Komponente (A) um eine durch Formel (i) dargestellte Komponente, eine durch Formel (ii) dargestellte Komponente oder um beide handelt: 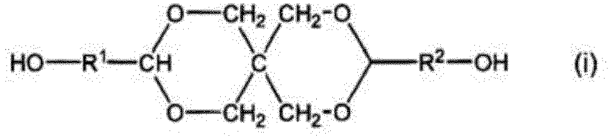 wobei R¹ und R² jeweils unabhängig ein zweiwertiger Substituent sind, ausgewählt aus der Gruppe bestehend aus aliphatischen Kohlenwasserstoffgruppen mit 1 bis 10 Kohlenstoffatomen, alicyclischen Kohlenwasserstoffgruppen mit 3 bis 10 Kohlenstoffatomen und aromatischen Kohlenwasserstoffgruppen mit 6 bis 10 Kohlenstoffatomen; 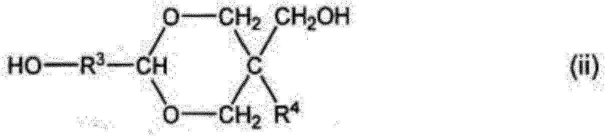 wobei R³ ein zweiwertiger Substituent ist, ausgewählt aus der Gruppe bestehend aus aliphatischen Kohlenwasserstoffgruppen mit 1 bis 10 Kohlenstoffatomen, alicyclischen Kohlenwasserstoffgruppen mit 3 bis 10 Kohlenstoffatomen und aromatischen Kohlenwasserstoffgruppen mit 6 bis 10 Kohlenstoffatomen;
R⁴ ein Wasserstoffatom oder ein einwertiger Substituent ist, wobei der einwertige Substituent ausgewählt ist aus der Gruppe bestehend aus aliphatischen Kohlenwasserstoffgruppen mit 1 bis 10 Kohlenstoffatomen, alicyclischen Kohlenwasserstoffgruppen mit 3 bis 10 Kohlenstoffatomen und aromatischen Kohlenwasserstoffgruppen mit 6 bis 10 Kohlenstoffatomen.

4. Das Verfahren zur Herstellung eines Polyesterharzes nach einem der Ansprüche 1 bis 3, wobei es sich bei der Komponente (A) um mindestens eine von 3,9-Bis(1,1-dimethyl-2-hydroxyethyl)-2,4,8,10-tetraoxaspiro[5.5]undecan und 5-Methylol-5-ethyl-2-(1,1-dimethyl-2-hydroxyethyl)-1,3-dioxan handelt.

## Revendications

1. Méthode de production d'une résine de polyester comprenant un motif constitutif dicarboxylate et un motif constitutif diol, le motif constitutif diol comprenant un motif constitutif ayant un squelette d'acétal cyclique, la méthode comprenant :
la réaction d'un diol (A) ayant un squelette d'acétal cyclique, d'un ester dicarboxylate de bis-alkyle (B), et d'un diol (C) n'ayant pas de squelette d'acétal cyclique, en présence d'un composé basique (D),
dans laquelle le composant (B) est un ou plusieurs choisis dans l'ensemble constitué par le téréphtalate de diméthyle et le 2,6-naphtalènedicarboxylate de diméthyle,
le composant (D) est l'acétate de potassium, et
le rapport du composant (D) au composant (B) est de 0,5 % en moles ou moins.

2. Méthode de production d'une résine de polyester selon la revendication 1, dans laquelle le rapport du composant (D) au composant (B) est de 0,001 à 0,5 % en moles.

3. Méthode de production d'une résine de polyester selon la revendication 1 ou 2, dans laquelle le composant (A) est un composé représenté par la formule (i), un composé représenté par la formule (ii), ou les deux : 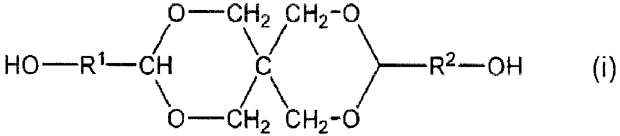 dans laquelle chacun de R¹ et R² est indépendamment un substituant divalent choisi dans l'ensemble constitué par les groupes hydrocarbonés aliphatiques ayant 1 à 10 atomes de carbone, les groupes hydrocarbonés alicycliques ayant 3 à 10 atomes de carbone, et les groupes hydrocarbonés aromatiques ayant 6 à 10 atomes de carbone ; 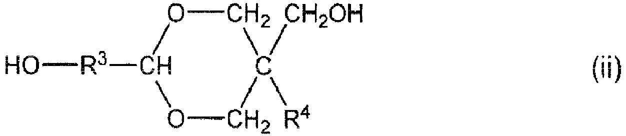 dans laquelle R³ est un substituant divalent choisi dans l'ensemble constitué par les groupes hydrocarbonés aliphatiques ayant 1 à 10 atomes de carbone, les groupes hydrocarbonés alicycliques ayant 3 à 10 atomes de carbone, et les groupes hydrocarbonés aromatiques ayant 6 à 10 atomes de carbone ; R⁴ est un atome d'hydrogène ou un substituant monovalent, le substituant monovalent étant choisi dans l'ensemble constitué par les groupes hydrocarbonés aliphatiques ayant 1 à 10 atomes de carbone, les groupes hydrocarbonés alicycliques ayant 3 à 10 atomes de carbone, et les groupes hydrocarbonés aromatiques ayant 6 à 10 atomes de carbone.

4. Méthode de production d'une résine de polyester selon l'une quelconque des revendications 1 à 3, dans laquelle le composant (A) est au moins l'un parmi le 3,9-bis(1,1-diméthyl-2-hydroxyéthyl)-2,4,8,10-tétraoxaspiro[5.5]undécane et le 5-méthylol-5-éthyl-2-(1,1-diméthyl-2-hydroxyéthyl)-1,3-dioxane.
